# EUROPÄISCHE PATENTSCHRIFT

(11) **EP 0 427 043 B1**
(45) Veröffentlichungstag und Bekanntmachung des Hinweises auf die Patenterteilung: **08.03.1995**
(21) Anmeldenummer: 90120356.2
(22) Anmeldetag: 24.10.1990
(51) Int. Cl.: H02H 7/093, H02H 7/08

(54) **Verfahren und Vorrichtung zur Erweiterung einer Stillstands-Schutzfunktion für Elektromotoren**
Process and device for extending a stall-protection function for electric motors
Procédé et dispositif pour élargir une fonction de protection contre blocage pour moteurs électriques

(30) Priorität: 10.11.1989 DE 3937446
(43) Veröffentlichungstag der Anmeldung: 15.05.1991
(73) Patentinhaber: Neef, Peter, D-71665 Vaihingen (DE)
(72) Erfinder: Neef, Peter, D-71665 Vaihingen (DE)
(74) Vertreter: Otte, Peter, Dipl.-Ing.

(56) Entgegenhaltungen:
- EP-A- 0 187 353
- DE-A- 2 738 246
- US-A- 4 266 257

## Beschreibung

### Stand der Technik

Die Erfindung geht aus von einem Verfahren bzw. einer Vorrichtung, die es bei der Ansteuerung von Elektromotoren ermöglicht, deren Stillstands-Schutzfunktion in einem bestimmten Sinn zu erweitern und insofern auch zu verbessern.

Dabei beruht die Erfindung auf einer schon seit sehr langer Zeit bekannten monolytisch integrierten Schaltung, etwa entsprechend einem Chip-Baustein U211B, wie er von der Firma Telefunken hergestellt und vertrieben wird und spezielle Anwendung findet bei modernen Phasenanschnittsteuersystemen, die für die Ansteuerung von Elektromotoren beliebiger Anwendung eingesetzt werden.

So ist es beispielsweise bekannt (DE-OS 32 22 065), ein elektrisches Handwerkzeug, speziell eine Handbohrmaschine oder einen Schrauber unter Zugrundelegung eines elektronischen Steuerbausteins für die Drehzahlregelung mit einer Drehmomentbegrenzung auszurüsten sowie in Verbindung damit eine Drehzahleinstellung vorzunehmen. Die Drehmomentbegrenzung ist dabei nur in der einen Drehrichtung, beispielsweise zum Einschrauben wirksam und wird in der anderen Drehrichtung automatisch abgeschaltet.

Bekannt ist es ferner, einen elektrischen Motor innerhalb eines Handwerkzeugs, mit welchem Muttern angezogen werden können (US-PS 3 892 146), mit einer elektrischen Ansteuerschaltung vorzusehen, die den Motor zum Anziehen der Mutter antreibt, bis dessen Ankerstrom einen vorgegebenen Wert überschreitet; die Ansteuerschaltung spricht auf diese Schwellwertüberschreitung an und reversiert die Drehrichtung des Motors und gibt so die Mutter über einen Adapter frei.

Bei einem weiteren bekannten Kraftschrauber mit Drehmomentbegrenzung (EU-OS 0 187 353; DE-PS 35 00 714) ist zur Ansteuerung des Elektromotors eine Phasenanschnittsteuerung vorgesehen, die ein Einstellpotentiometer für ein gewünschtes Drehmoment aufweist, wobei im elektrischen Lastkreis des Elektromotors ein üblicher Triac liegt, dessen Stromflußwinkel von der Phasenanschnittsteuerung je nach Einstellung freigegeben wird.

Wie weiter vorn schon erwähnt, verfügen solche bekannten Phasenanschnittsteuerungssysteme auch immer über eingebaute Drehzahl-Schutzfunktionen, die dann ansprechen, wenn der Elektromotor unter Last bei Stillstand oder angenähertem Stillstand weiter angesteuert wird.

Bei einer weiteren bekannten Schutzschaltung dieser Art (DE-A-27 38 246) wird der Tachogenerator und seine Funktion direkt in das von einer Regelschaltung bestimmte Speiseverhalten für den Elektromotor mit einbezogen, um so auf jeden Fall sicherzustellen, daß dann, wenn der Tachogenerator aus irgendwelchen Gründen ausfällt, der Elektromotor durch die ihn ansteuernde Regelschaltung abgeschaltet wird und es nicht zu gefährlichen Drehzahlüberhöhungen kommt.

Zu diesem Zweck ist zunächst eine Ladeschaltung vorgesehen, die bei erstmaligem Anlegen der Speisespannung für den Elektromotor bzw. die diesen speisende Regelschaltung einen Transistor leitend schaltet, dessen Ausgangssignal in dieser leitenden Schaltposition die Ansteuerung des Elektromotors über die Regelschaltung sicherstellt.

Sobald der Elektromotor hinreichend hochgelaufen ist, verliert die Speicherschaltung zunehmend ihre Fähigkeit, den Transistor weiter offenzuhalten - andererseits wird über die jetzt erzeugten Tachogeneratorimpulse ein weiterer Transistor leitend geschaltet, der nach Art eines Selbsthaltekreises einen Speisestromkreis für den ersten Transistor bildet, so daß dieser in der Lage ist, die Regelschaltung weiter mit einem geeigneten Funktionspotential anzusteuern. Ergeben sich jedoch vom Tachogenerator keine Impulse, beispielsweise weil dessen Anschlußverbindungen abgefallen sind oder dieser in sonstiger Weise gestört ist, dann kann der erste Transistor nicht mehr leitend gehalten werden und unterbricht gleichzeitig die Funktion der Regelschaltung, die den Motor daraufhin abschaltet.

In gleicher Weise verfügt der weiter vorn schon erwähnte Phasenanschnittsteuer-Chip U 211 B von Telefunken über einen Eingangsanschluß (Pin 8), dem Tachogeneratorimpulse zugeführt sind und der intern einen Frequenz-Spannungs-Wandler ansteuert. Durch eine entsprechende interne Verschaltung ergeben sich dann bei jedem Ansteuersignal an diesem Eingangsanschluß Pin 8, der, wie erwähnt, mit einem Tachogenerator der überwachten und angesteuerten Elektromaschine verbunden ist, Umladevorgänge, die zur Freigabe der Triac-Ansteuerung ausgenutzt werden.
Hierzu ist ein weiterer Eingangsanschluß (Pin 18) vorgesehen, der eine Ausgangsimpulssperre ermöglicht, die dann wirksam wird, wenn keine Umladevorgänge im Frequenz-Spannungs-Wandler, hervorgerufen durch eingehende Drehzahlimpulse, mehr stattfinden. In diesem Falle wird ein an den Eingangsanschluß entsprechend Pin 18 angeschlossener Kondensator über einen Widerstand bis zu einer Ausschaltschwelle hochgeladen, woraufhin die Triac-Zündimpulse automatisch von dem Steuerbaustein entsprechend U 211 B unterbrochen werden.

Bei einer solchen für sich gesehen und auch in Verbindung mit der Ansteuerung von Elektromotoren bekannten Schaltung können sich bei einem speziellen Anwendungsfall erhebliche Probleme ergeben, die aus dieser Tachoüberwachungs- und Drehzahlstillstandsfunktion resultieren, und zwar wie folgt.

Wie erwähnt, wird durch die Umladevorgänge im f/u-Wandler die Ausgangsimpulssperre nicht wirksam, weil der Steuerschaltung U 211 B durchlaufend Drehzahlimpulse beliebiger Form und Größe zugeführt werden. Dabei muß die ordnungsgemäße und insofern auch willkommene Abschaltfunktion (also Unterbrechung der Triac-Zündimpulse) dann zu einem fehlerhaften Arbeiten führen, wenn ein solcher Elektromotor zum Antrieb von Kraftschraubern dient, bei denen mit zum Teil extrem hohen Drehmomenten und einem entsprechend zwischengeschalteten hochuntersetzten Getriebe Schraubvorgänge realisiert werden. Bei solchen Kraftschraubern ergibt sich, insbesondere wenn diese für die Erzeugung hoher und höchster Drehmomente ausgelegt sind, bis zur Abschaltung des Eletkromotors über die Drehzahl-Stillstandsüberwachungsfunktion eine derart starke Verspannung im gesamten mechanischen Getriebezug einschließlich Tordierung von Wellen u.dgl., daß nach dem Abschalten des Motorstroms über den Triac der Phasenanschnittsteuerung im Steuerbaustein U211B als beispielsweise hier eingesetzte Steuerschaltung ein gewisser Rücklauf im Getriebe- und Motorbereich auftritt, was natürlich wieder zu der Erzeugung erneuter Tachogenerator-Impulse über den vorhandenen Tachogenerator oder eine sonstige, Drehzahlimpulse erzeugende Einrichtung führt.

Nun ist es aber gerade eine Eigenschaft des genannten Steuerbausteins und praktisch jeder anderen modernen Phasenanschnitt-Steuerschaltung, daß bei Eingehen von Drehzahlimpulsen, im vorliegenden Fall beispielsweise die Umladevorgänge im Wandler wieder aufgenommen werden und die Ausschaltsperre unterschritten wird, so daß es zu einem erneuten Ansteuern des Elektromotors mit dem vollen Motorstrom kommt. Der Motor läuft daher wieder an und dreht auch soweit möglich hoch. Er wird dann wieder zum Stillstand blockiert, da die Schraube ja schon angezogen gewesen ist, so daß die Schaltung wieder ausschaltet bei Ausbleiben der Drehzahlimpulse, aber über die wiederum erzeugte starke mechanische Verspannung kommt es erneut zum Rücklauf und das ganze System gerät in einen pulsierenden Betrieb. Ein solches Schwingungsverhalten ist aber bei den hier ins Auge gefaßten Kraftschraubern besonders unangenehm, da sich hierdurch eine Fehlfunktion ergibt, die man durch die Drehmomenterfassung und Einstellung gerade ausschalten möchte. Tatsächlich sind alle elektronischen Steuerbausteine, die moderne Phasenanschnitt-Steuersysteme beinhalten, so ausgelegt, daß auch eine Drehmomentvorgabe möglich ist, so daß es bei Einstellung eines bestimmten, auch sehr hohen Drehmoments möglich ist, bei Kraftschraubern ein einwandfreies, insbesondere stoßfreies Anschrauben bis zum Erreichen des maximalen Drehmoments vorzugeben, ohne daß es zu Drehmomentspitzen, abrupten Schwingungen oder sonstigem Störverhalten kommt. Die soeben geschilderte, sich über die Drehzahlüberwachung im Stillstand ergebene Fehlfunktion bewirkt hier aber das Gegenteil, so daß die Vorgabe definierter Drehmomente nicht mehr möglich ist, da durch die mechanische Kinematik im System bei einem erneuten Wiederanlaufen nach Rücklauf stoßartige, abrupte Drehmomentspitzen auftreten und sich durch die hohe Übersetzung in besonders unerwünschter Weise auf das einzuschraubende oder festzuschraubende Teil auswirken.

Der Erfindung liegt daher die Aufgabe zugrunde, hier Abhilfe zu schaffen und bei einem insbesondere bei Kraftschraubern eingesetzten Elektromotor die Stillstands-Schutzfunktion so zu erweitern, daß der Elektromotor auch dann nicht wieder hochfährt, also von der vorhandenen monolitisch integrierten Phasenanschnitt-Steuerschaltung wieder voll eingeschaltet wird, wenn sich durch die Verspannungen im System beim erstmaligen Abschalten aufgrund eines Reversiervorgang erneute Drehzahlimpulse, jetzt beim Rücklauf, ergeben.

### Vorteile der Erfindung

Die Erfindung löst diese Aufgabe mit den kennzeichnenden Merkmalen des Anspruchs 1 bzw. des Anspruchs 3 und hat den Vorteil, daß beim erstmaligen Abschalten des den Kraftschrauber antreibenden Elektromotors deshalb, weil der Elektromotor zum Stillstand bzw. nahezu zum Stillstand gekommen ist, ein erneutes Wiedereinschalten auch dann unmöglich ist, wenn aufgrund der Entspannung in den mechanischen, am Schraubvorgang beteiligten Komponenten ein Rücklauf des Elektromotors und daher eine erneute Erzeugung von Tachogeneratorimpulsen auftritt.

Vorteilhaft ist ferner, daß die durch die Erfindung ermöglichte Abschaltung des Elektromotors unter allen Umständen aufrechterhalten wird, und zwar so lange, wie die gesamte Schaltung an Versorgungsspannung liegt, d.h. mit anderen Worten, durch die Erfindung wird gleichzeitig eine Verriegelungsfunktion geliefert, die erst dann wieder aufgehoben wird, wenn durch Netztrennung das Gerät von einer Bedienungsperson abgeschaltet und beispielsweise für die Durchführung eines weiteren Schraubvorgangs an anderer Stelle wieder eingesetzt und eingeschaltet wird.

Dabei ist entscheidend, daß die Erfindung nicht mit dann notwendigerweise größerem Aufwand im Bereich der kinematischen und mechanischen Gegebenheiten angreift und beispielsweise versucht, was auch möglich wäre, einen Rücklauf generell zu verhindern, so daß schon von daher keine Tachogeneratorimpulse mehr erzeugt werden können, sondern es erfolgt eine elektrische, durch eine geeignete äußere Beschaltung des verwendeten Chip-Bausteins U211B realisierte Umschaltung, die sicherstellt, daß die durch den Chip-Baustein vorgesehene Ausgangsimpulssperre dann, wenn erstmals keine Umladevorgänge im Wandler mehr aufgetreten sind, aufrechterhalten bleiben, auch wenn zu einem späteren Zeitpunkt erneut infolge eingehender Tachogeneratorimpulse oder -signale Umladevorgänge wieder erzeugt werden.

Durch die in den Unteransprüchen aufgeführten Maßnahmen sind vorteilhafte Weiterbildungen und Verbeserungen der Erfindung möglich. Besonders vorteilhaft ist die Ausbildung des Unterbrechungs- und Verriegelungsbausteins in Form einer bistabilen Kippschaltung, die sich bei Einschalten des Geräts in einer ersten Ausgangsposition befindet, in welcher die von dem Phasenanschnitt-Steuerungs-Chip realisierte Stillstands-Schutzfunktion für den Elektromotor durchgeführt werden kann, die jedoch dann in ihren zweiten Verriegelungszustand umschaltet, der dann nur noch durch Unterbrechen der Versorgungsspannung wieder entriegelt werden kann, wenn die Schaltung erstmalig angesprochen und wegen erfaßtem Drehzahlstillstand den Strom zum Motor unterbrochen hat.

### Zeichnung

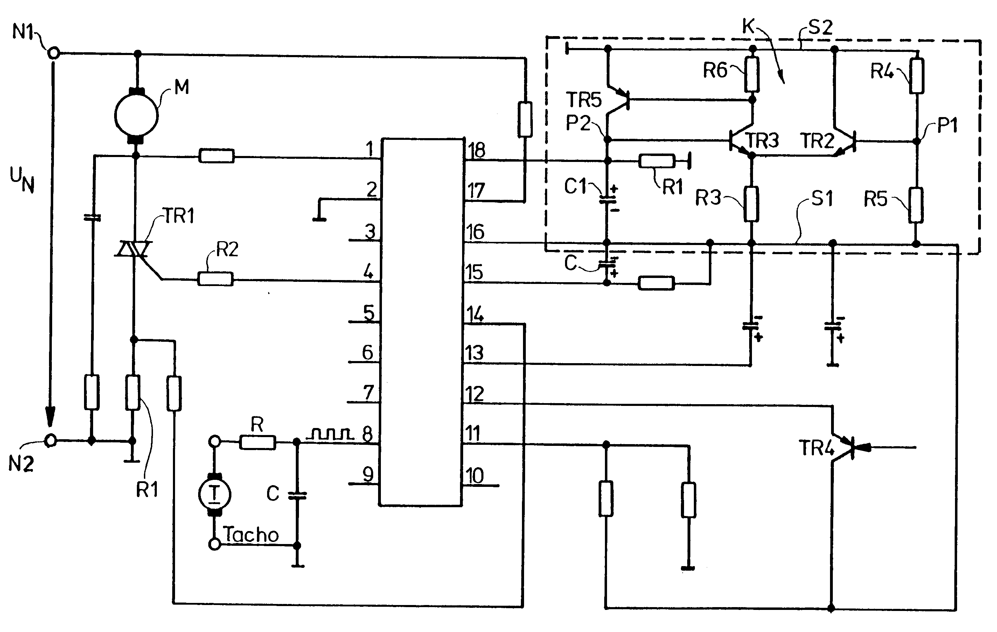

Ausführungsbeispiele der Erfindung sind in der Zeichnung dargestellt und werden in der nachfolgenden Beschreibung näher erläutert. Die Zeichnung zeigt in Form einer detaillierten Schaltung mit Einzelkomponenten das Zusammenwirken des Phasenanschnittsteuer-IC in Verbindung mit der die Erfindung realisierenden Erweiterung der Stillstands-Schutzfunktion.

### Beschreibung der Ausführungsbeispiele

Der Grundgedanke vorliegender Erfindung besteht darin, bei einem bekannten IC-Ansteuerchip in Form einer Phasenanschnittsteuerung für Elektromotoren, und zwar speziell des Telefunken-Regelbausteins U211B dafür zu sorgen, daß für den besonderen Einsatzfall bei einem Kraftschrauber eine durch mechanische Verspannungen im mechanischen Getriebezug hervorgerufene rückläufige Bewegung nicht zu einem erneuten Einschalten des Elektromotors führen kann, indem diese Schutzfunktion am IC-Baustein durch Verbinden mit einem vorgegebenen Potential (Masse) unterbrochen und gleichzeitig eine Verriegelung der Schaltung in dieser Position vorgenommen wird.

In der Zeichnung ist der Motor M, wie bei Phasenanschnitt-Steuerschaltungen üblich, in Reihe mit dem Schaltglied, einem Triac TR1 geschaltet; die Verbindung zu den beiden Netzanschlußklemmen N1, N2 vervollständigt sich durch einen Stromsensorwiderstand R1, dessen Ausgang zum Eingang 19 des den gesamten Steuerchip umfassenden Bausteins U211B geführt ist.

Die Darstellung der Zeichnung umfaßt neben dem erfindungsgemäßen Bereich, der durch die gestrichelte Umrandung markiert ist, lediglich einige weitere Schaltungselemente, die zum Verständnis der Erfindung notwendig sind; die meisten restlichen Anschlüsse (Pin 1 bis Pin 18) des Steuerbausteins U211B sind unbeschaltet belassen, da diese Bereiche nicht zu vorliegender Erfindung gehören und im übrigen der Fachmann problemlos in der Lage ist, sich aufgrund der ausführlichen Beschreibung zu diesem IC-Steuerbaustein U211B der Telefunken die erforderlichen Schaltungskomponenten und auch die vorgeschlagene Handhabung dieses IC-Steuerbausteins aus der veröffentlichten Literatur herauszusuchen.

Wesentlich ist lediglich, daß der Ausgang einer Tachometereinrichtung T, gegebenenfalls über ein RC-Glied aus R und C geschaltet, am Eingang Pin 8 des IC-Bausteins anliegt, der intern so geschaltet ist, daß diesem Eingangsanschluß entsprechend Pin 8 ein Eingangsfrequenz-Spannungs-Wandler (f/u-Wandler) zugeordnet ist, der mit jedem Umladevorgang, d.h. jeweils mit Eingehen eines Drehzahlsignals von der Tachoeinrichtung T einen Kondensator C1 entlädt, der mit einem zugeordneten Widerstand R1 ein RC-Glied bildet und über den Anschlußeingängen entsprechend Pin 16 und Pin 18 liegt. Der IC-Anschluß Pin 16 führt dabei ein konstantes Spannungspotential, gegenüber welchem sich der Kondensator C1 dann hochlädt, also bei dem speziellen Ausführungsbeispiel auf positive Spannung auflädt, wenn im f/u-Wandler keine Umladevorgänge aufgrund eingehender Drehzahlsignale mehr auftreten. Die insofern bekannte Funktion über den Anschlußpin 18 des IC-Bausteins U211B ist dann so, daß, wie weiter vorn schon erwähnt, bei Ausbleiben der Entladevorgänge der Kondensator C eine Ausschaltschwelle überschreitet und dann die Zuführung weiterer Triac-Zündimpulse vom Anschlußpin 4 über den Widerstand R2 zum Triac TR1 unterbrochen wird,so daß der Triac den Stromkreis sperrt und der Motor M stromlos wird.

Über ein weiteres aktives Schaltungselement entsprechend TR4, welches ein Transistor sein kann, wird dabei dem Anschluß entsprechend Pin 12 des IC-Bausteins U211B noch ein Steuereingangssignal für die Phasenanschnittsteuerung zugeleitet, mit welchem sich das vom Elektromotor M jeweils aufzubringende Drehmoment bestimmen läßt; hierauf braucht nicht weiter eingegangen zu werden, da es sich hierbei um bekannten Stand der Technik handelt.

Die Grundfunktion der bisher geschilderten Schaltung ist dann so, daß bei Anlegen von Spannung an den Elektromotor dieser anläuft und bei durch ihn erfolgenden Antrieb eines Kraftschraubers eine Schraube mit einem über das Schaltungselement TR4 eingegebenen Drehmomentschwellwert angezogen wird. Im Verlauf dieser Arbeit wird der Elektromotor M notwendigerweise zum Stillstand gelangen, da der Weg, den die Schraube beim Anziehen zurücklegt, endlich ist und zu einem vorgegebenen Zeitpunkt unter Beachtung des vorgegebenen Drehmomentschwellwerts angezogen sein wird. Dies führt über das Untersetzungsgetriebe zu einem allmählichen Blokkieren des Motors, der immer langsamer dreht, bis schließlich bei Stillstand oder nahezu Stillstand die Drehsignalimpulse von der Tachoeinrichtung T, in welcher Form auch immer diese geliefert werden, am Anschlußpin 8 des IC-Bausteins ausbleiben und der Kondensator C1 über den Anschlußpin 18 nicht mehr entladen wird. Das am Kondensator C1 ansteigende Potential unterbricht dann über die Funktion des IC-Bausteins die weitere Ansteuerung des Motors durch Stromlosschalten des Triacs TR1.

Entsprechend einem Merkmal vorliegender Erfindung ist dem Kondensator C1 eine Schaltung zugeordnet, die ganz allgemein verhindert, daß dieser Kondensator nach dem erstmaligen Abschalten des Elektromotors M nochmals in der Lage ist, sich zu entladen und daher die intern im IC-Chip vorgegebene Ausschaltschwelle zu unterschreiten, was nämlich ein erneutes Zünden des Triacs und Wiederanlaufen des Motors zur Folge hätte.

Die dem Kondensator C1 zugeordnete Schaltung umfaßt zwei nach Art eines bistabilen Kippgliedes miteinander verschaltete Halbleiterschaltelemente, nämlich Transistoren TR2 und TR3; diese sind über ihre miteinander verbundenen Emitter und einem gemeinsamen Emitterwiderstand R3 mit der Konstantspannungsschiene S1 verbunden und liegen mit ihren anderen Hauptelektrodenanschlüssen (Kollektoren) an einer gemeinsamen Masseschiene S2, die im vorliegenden Fall allerdings positives Potential führt, was zum Verständnis der Schaltung erwähnenswert ist.

Es ist eine Sollwert-Spannungsteilerschaltung aus den Widerständen R4 und R5 vorgesehen, die an die beiden Spannungsschienen S1 und S2 angeschaltet ist und dem einen Transistor TR2 der Kippstufe K ein solches Vorspannungspotential (Sollwert) am Schaltungspunkt P1 zuführt, daß dieses für den Normalbetrieb stets oberhalb eines Istwertpotentials am Kondensator C1 (Schaltungspunkt P2) liegt, welches durch die ständigen Entladungen, wie schon ausführlich erläutert, trotz der kontinuierlichen Aufladung über den Reihenwiderstand R1 auf einen niederen, unterhalb der erwähnten Ausschaltschwelle liegenden Potentials verbleibt. In diesem Fall ist dann der Transistor TR2 der Kippschaltung K leitend und hält über den gemeinsamen Kopplungswiderstand R3 seinen Paralleltransistor TR3 gesperrt; die Kippschaltung wirkt daher wie ein Komparator, der in dem Moment umschaltet, in welchem das Potential am Schaltungspunkt P2, also über dem Kondensator C1 positiver als das Potential am Schaltungspunkt P1 wird, und zwar aufgrund des Ausbleibens von auf die Wirkung der Tachogeneratoreinrichtung zurückzuführenden Entladeimpulsen - mit anderen Worten, der Elektromotor steht und er wird bei Überschreiten der Ausschaltschwelle am Anschlußpin 18 abgeschaltet. In diesem Fall kippt dann die Kippschaltung K in ihren zweiten, gleichzeitig verriegelten Zustand, der Transistor TR2 sperrt; der Transistor TR3 wird leitend und zieht über seinen Kollektorwiderstand R6 das Ansteuerpotential eines weiteren Transistors TR5 so weit nach unten, daß auch TR5 leitet, wodurch der Schaltungspunkt P2, also das Potential am Anschlußpin 18 praktisch auf Massepotential (volle positive Spannung) gelegt wird. Hierdurch wird unter allen Umständen sichergestellt, daß auch bei dann erfolgendem Rückdrehen und erneut eintreffenden Tachogeneratorimpulsen eine Entladung des Kondensators C1 unter die Ausschaltschwelle nicht mehr möglich ist, so daß der Elektromotor M ausgeschaltet bleibt und sichergestellt ist, daß sich ein einwandfreier glatter und ohne Stoßimpulse abwickelnder Schraubvorgang durchgeführt ist, ohne daß es zu den unangenehmen Drehmomentspitzen und dem erneuten Schwingverhalten oder Pulsieren des Systems kommen kann.

Da aufgrund des Durchschaltens des Transistors TR5 der Schaltungspunkt P2 nunmehr grundsätzlich oberhalb des durch die Spannungsteilerwirkung auf R4/R5 geteilten Potentials am Schaltungspunkt P1 verbleibt, geht diese Schaltung hierdurch auch in einen verriegelten Zustand über, der erst dann wieder gelöst, also freigegeben werden kann, wenn die Netzversorgungsspannung abgeschaltet, der Motor also vom Netz getrennt wird.

## Patentansprüche

1. Verfahren zur Erweiterung einer Stillstands-Schutzfunktion für Elektromotoren, insbesondere bei von Elektromotoren angetriebenen Eleltrohandwerkzeugen, Kraftschraubern mit zwischengeschaltetem Untersetzungsgetriebe o.dgl., wobei ein bei laufendem Elektromotor auftretendes Drehzahlsignal (Tachogenerator oder ähnliches) das Erreichen einer Ausschaltschwelle eines elektronischen Steuerbausteins verhindert, dadurch gekennzeichnet, daß im Moment des erstmaligen Abschaltens des Elektromotors aufgrund der Stillstands-Schutzfunktion ein nochmaliges Unterschreiten einer vom Steuerbaustein (U211B) vorgegebenen Ausschaltschwelle durch einen elektrischen Speicher (Kondensator C1) durch Festhalten der Speicherspannung auch dann verhindert wird, wenn sich im Moment des Abschaltens aufgrund der mechanischen Freigabe und der sich im mechanischen Antriebszug gebildeten Spannungen durch kurzzeitiges Rückdrehen ein erneutes Tachogeneratorsignal ergibt.

2. Verfahren nach Anspruch 1, dadurch gekennzeichnet, daß die in Abhängigkeit zu den jeweils eingehenden Drehzahlsignalen (Drehzahlimpulsen) um die vom Regelbaustein (U211B) vorgegebene Ausschaltschwelle schwankende Speicherspannung durch das Umschalten eines Kippgliedes (K) auf einem vorgegebenen Wert festgehalten und gleichzeitig dadurch verriegelt wird, daß das Kippglied (K) erst bei Trennen der Schaltung von der Versorgungsspannung in seinen Ausgangszustand zurückkippt.

3. Vorrichtung zur Erweiterung einer Stillstands-Schutzfunktion für Elektromotoren, insbesondere bei von Elektromotoren angetriebenen Elektrohandwerkzeugen, Kraftschraubern mit zwischengeschaltetem Untersetzungsgetriebe u.dgl., mit einem integrierten Drehmoment/Drehzahl-Regelbaustein (U211B) der einen eine Ausschaltschwelle steuernden Speicher (Kondensator C1) so lange aufgrund eines eingehenden Tachogenerator-Signals unterhalb der Ausschaltschwelle hält, wie der Elektromotor dreht, dadurch gekennzeichnet, daß bei erstmaligem Überschreiten der vom IC-Regelbaustein (U211B) vorgegebenen Ausschaltschwelle durch ein Speicherpotential eine dem Speicher (Kondensator C1) zugeordnete Halteschaltung (TR5) aktiviert wird derart, daß das Speicherpotential auch durch vom IC-Regelbaustein (U211B) zu einem späteren Zeitpunkt aufgrund eines Tachogenerator-Rücklaufs erzeugte Umladevorgänge unverändert und den Elektromotor in seiner Ausschaltposition sichernd verbleibt.

4. Vorrichtung nach Anspruch 3, dadurch gekennzeichnet, daß der auf die vom IC-Regelbaustein (U211B) intern vorgegebene Ausschaltschwelle einwirkende Speicher ein Kondensator (C1) ist, der mit einem Widerstand (R1) ein RC-Glied bildet und bei eingehenden Drehzahlsignalen kontinuierlich bzw. intermittierend entladen wird und daß die Haltevorrichtung (TR5) für den Speicher ein Reihentransistor zu dem Kondensator (C1) ist, der von einem Kippglied (K) eingeschaltet wird.

5. Vorrichtung nach Anspruch 3 oder 4, dadurch gekennzeichnet, daß das Kippglied eine vorgegebene Referenzspannung aus einem Spannungsteiler (R4, R5) ableitet und mit der Spannung über dem Kondensator (C1) als Speicher vergleicht und gleichzeitig dann, wenn die Kondensatorspannung die Ausschaltschwelle des IC-Regelbausteins (U211B) überschreitet, in seinen zweiten Zustand umschaltet und den Reihentransistor (TR5) zum Speicherkondensator (C1) leitend steuert.

## Claims

1. Method of extending a standstill protection function for electric motors, particularly in electric hand tools driven by electric motors or power-driven screwdrivers with intermediate reduction gearing or the like, wherein a speed signal (tacho generator or similar) which is generated while the electric motor is running, prevents a cut-out threshold of an electronic control module being reached, characterised in that, at the moment the electric motor is first switched off, further falling below a cut-out threshold, which is preset by the control module (U211B), is prevented on account of the standstill protection function by an electric accumulator (capacitor C1) by holding the accumulator voltage even if, at the moment of switching off, a further tacho generator signal is obtained on account of the mechanical release and the voltages formed in the mechanical drive train by brief reverse rotation.

2. Method according to claim 1, characterised in that the accumulator voltage, fluctuating about the cut-out threshold, which is preset by the closed-loop control module (U211B) in relation to each incoming speed signal (speed pulse), is held at a preset value by the switching of a bistable element (K) and is at the same time latched in that the bistable element (K) does not tip back into its initial state until the circuit has been disconnected from the supply voltage.

3. Device for extending a standstill protection function for electric motors, particularly in electric hand tools driven by electric motors or power-driven screwdrivers with intermediate reduction gearing or the like, with an integral torque/speed closed-loop control module (U211B) which, on the basis of an incoming tacho generator signal, holds an accumulator (capacitor C1) controlling a cut-out threshold beneath the cut-out threshold for as long as the electric motor is rotating, characterised in that, when the cut-out threshold, which is preset by the IC closed-loop control module (U211B), is first exceeded by an accumulator potential, a holding circuit (TR5) allocated to the accumulator (capacitor C1) is activated such that the accumulator potential also remains unchanged by discharge operations subsequently generated by the IC closed-loop control module (U211B) on account of reverse motion of the tacho generator, and the electric motor remains secured in its cut-out position.

4. Device according to claim 3, characterised in that the accumulator acting on the cut-out threshold, which is internally preset by the IC closed-loop control module (U211B), is a capacitor (C1) which, together with a resistor (R1), forms an RC element and is continuously or intermittently discharged at incoming speed signals, and that the holding device (TR5) for the accumulator is a transistor in series with the capacitor (C1), which is switched on by a bistable element (K).

5. Device according to claim 3 or 4, characterised in that the bistable element derives a preset reference voltage from a voltage divider (R4, R5) and compares it with the voltage via the capacitor (C1) acting as an accumulator and, at the same time, if the capacitor voltage exceeds the cut-out threshold of the IC closed-loop control module (U211B), switches to its second state and actively controls the transistor (TR5) in series with the accumulator capacitor (C1).

## Revendications

1. Procédé pour étendre une fonction de protection contre le blocage de moteurs électriques, notamment d'outils électroportatifs entraînés par des moteurs électriques tels que des visseuses avec réducteurs intermédiaires ou outils analogues, selon lequel un signal de vitesse de rotation (générateur tachymétrique ou analogue) engendré par la rotation du moteur électrique évite qu'un composant de commande électronique n'atteigne un seuil de coupure, caractérisé en ce qu'au moment de la première coupure du moteur électrique, du fait de la fonction de protection contre le blocage, on évite de passer une nouvelle fois en dessous d'un seuil de coupure prédéterminé par le composant de commande (U211B) par une mémoire électrique (condensateur C1) en enregistrant la tension de stockage même lorsqu'au moment de la coupure, du fait de la libération mécanique et des tensions formées dans la transmission mécanique, par la rotation inverse de courte durée, il y a un nouveau signal de générateur tachymétrique.

2. Procédé selon la revendication 1, caractérisé en ce que la tension enregistrée qui oscille autour du seuil de commutation prédéterminé par le composant de régulation (U211B) en fonction des signaux de vitesse de rotation (impulsions de vitesse de rotation) d'entrée, est maintenue à une valeur prédéterminée par la commutation d'un élément de bascule (K) et est en même temps verrouillée du fait que l'élément de bascule (K) ne revient à son état initial que lors de la coupure du circuit par rapport à la tension d'alimentation.

3. Dispositif pour étendre la fonction de protection contre le blocage de moteurs électriques, notamment d'outils électroportatifs entraînés par des moteurs électriques, des visseuses avec des réducteurs intermédiaires ou moyens analogues, avec un composant de régulation couple/vitesse de rotation (U211B), intégré, qui maintient une mémoire (condensateur C1) commandant un seuil de coupure en dessous du seuil de coupure du fait d'un signal d'entrée d'un générateur tachymétrique, aussi longtemps que le moteur électrique fonctionne, caractérisé en ce qu'au premier dépassement vers le haut du seuil de coupure prédéterminé par le composant de régulation en circuit intégré (U211B), par un potentiel de mémoire, on active un circuit de maintien (TR5) associé à la mémoire (condensateur C1) par un potentiel de mémoire, de façon que le potentiel de mémoire reste inchangé du fait d'un composant de régulation en circuit intégré (U211B) jusqu'à un instant ultérieur du fait d'une opération de transfert de charge créée par le retour du générateur tachymétrique et garantit que le moteur électrique reste dans sa position de coupure.

4. Dispositif selon la revendication 3, caractérisé en ce que la mémoire qui agit sur le seuil de coupure prédéterminé de manière interne par le composant de régulation en circuit intégré (U211B) est un condensateur (C1) formant un élément RC avec une résistance (R1) et est déchargé en continu ou de manière intermittente en fonction des signaux de vitesse de rotation d'entrée et en ce que le dispositif de maintien (TR5) de la mémoire est un transistor série par rapport au condensateur (C1) qui est rendu passant par un élément de bascule (K).

5. Dispositif selon la revendication 3 ou 4, caractérisé en ce que l'élément de bascule déduit une tension de référence prédéterminée d'un diviseur de tension (R4, R5) et la compare à l'aide de la tension par le condensateur (C1) comme mémoire et, en même temps, lorsque la tension du condensateur dépasse le seuil de coupure du composant de régulation en circuit intégré (U211B), commute dans son second état et débloque le transistor série (TR5) vers le condensateur formant mémoire (C1).
